# FASCICULE DE BREVET EUROPEEN

(11) **EP 0 661 719 B1**
(45) Date de publication et mention de la délivrance du brevet: **22.01.1997**
(21) Numéro de dépôt: 94403009.7
(22) Date de dépôt: 23.12.1994
(51) Int. Cl.: G21C 7/20

(54) **Tube de guidage pour assemblage combustible nucléaire et procédé de fabrication d'un tel tube**
Leitrohr für Kernbrennstabbündel und Fertigungsverfahren eines solchen Rohres
Guide tube for nuclear fuel assembly and fabrication process for such a tube

(30) Priorité: 29.12.1993 FR 9315826
(43) Date de publication de la demande: 05.07.1995
(73) Titulaire: FRAMATOME, 92400 Courbevoie (FR); COMPAGNIE GENERALE DES MATIERES NUCLEAIRES, F-78140 Velizy Villacoublay (FR)
(72) Inventeur: Verdier, Michel, F-69100 Villeurbanne (FR)
(74) Mandataire: Fort, Jacques

(56) Documents cités:
- EP-A- 0 036 821
- FR-A- 1 567 000
- US-A- 5 068 083

## Description

La présente invention concerne les tubes de guidage de crayon de commande destinés à être incorporés au squelette d'un assemblage combustible nucléaire. On sait que des assemblages de combustible couramment utilisés comportent deux embouts reliés par des tubes guides en alliage à base de zirconium auxquels sont généralement fixées des grilles de maintien de crayons de combustible suivant un réseau régulier. Certains au moins des tubes de guidage des assemblages placés dans un réacteur sont prévus pour recevoir les crayons de grappes de contrôle lors de la descente de ces dernières. Classiquement, ces tubes de guidage présentent dans leur partie inférieure une zone étranglée destinée à freiner la chute de la grappe à la fin du déplacement de cette dernière, par laminage du courant de réfrigérant chassé par le crayon, entre ce dernier et la zone étranglée.

Cette partie inférieure est très sollicitée en cas de chute des grappes, du fait de la surpression hydraulique qui apparaît alors. Elle est également sollicitée dans le cas de phénomènes transitoires qui provoquent successivement la levée de l'assemblage, puis sa retombée. Au cours de cette retombée, la force d'inertie de l'assemblage risque de provoquer le flambage des parties affaiblies des tubes.

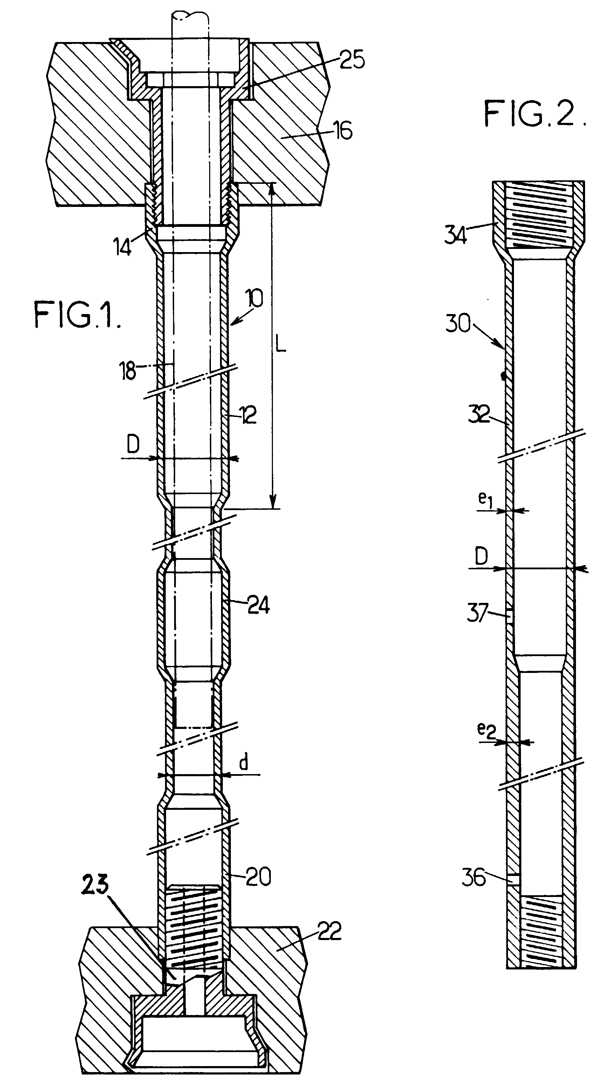

La figure 1 montre, à titre d'exemple, la constitution générale et le mode de fixation d'un tube guide 10 couramment utilisé à l'heure actuelle. Ce tube de guidage a une épaisseur constante sur la quasi totalité de sa longueur. Dans une partie courante 12, dont la longueur L est généralement d'environ 80 % de la longueur totale du tube, ce dernier présente un diamètre externe nominal D. La partie courante 12 se prolonge vers le haut, dans le cas illustré, par une zone renflée terminale 14 de fixation à l'embout supérieur 16 de l'assemblage par une douille vissée 25. La partie inférieure du tube guide présente, sur la majeure partie de sa longueur, un diamètre réduit d. Du fait que l'épaisseur du tube est constante, le rétreint du tube de D à d se traduit par une diminution du diamètre interne. Le réfrigérant chassé par un crayon 18 qui descend le long du tube subit en conséquence une perte de charge importante lorsque le crayon dépasse la partie courante 12. Le pied 20 du tube peut n'être pas rétreint, notamment lorsque les moyens de fixation à l'embout inférieur 22 sont du genre montré en figure 1, utilisant une vis 23 creuse pour constituer un passage étranglé d'échappement du réfrigérant, ou encore pour fixer une grille non représentée. La partie 12 peut présenter localement une zone 24 de diamètre D, permettant par exemple de fixer une autre grille non représentée.

Il n'est pas nécessaire de décrire ici les moyens de fixation du tube de guidage 10 aux embouts 16 et 22 : ils sont par exemple du genre décrit dans les documents FR-A-2 368 785 et 2 465 916, auxquels on pourra se reporter.

Le rétreint de diamètre d du tube de guidage de la figure 1 constitue une partie affaiblie, susceptible de se déformer en cas de contraintes excessives. On pourrait penser écarter ce risque en réduisant localement le diamètre interne de la partie basse d'un tube de guidage de diamètre constant D en soudant un tronçon de tube dans la partie inférieure. Mais ce soudage laisserait subsister des contraintes résiduelles, également gênantes, ainsi que des discontinuités géométriques de diamètre et de rectitude.

On connaît à ce sujet du document US-A-5 068 083 un tube de guidage conforme au préambule de la revendication 1, en plusieurs pièces assemblées par emmanchement mécanique ; cette constitution en deux pièces peut provoquer des contraintes mécaniques et des discontinuités.

La présente invention vise notamment à fournir un tube de guidage pour assemblage combustible répondant mieux que ceux antérieurement connus aux exigences de la pratique, notamment en ce qu'il permet d'éviter ou de réduire le risque d'affaiblissement local et de discontinuités.

Dans ce but, l'invention propose notamment un tube de guidage de crayon de commande pour assemblage combustible de réacteur nucléaire, conforme à la partie caractérisante de la revendication 1.

L'invention propose également un procédé de fabrication de tube de guidage de crayon de commande pour assemblage combustible de réacteur nucléaire, suivant la revendication 4.

L'invention sera mieux comprise à la lecture de la description qui suit d'un mode particulier de réalisation, donné à titre d'exemple non limitatif. La description se réfère aux dessins qui l'accompagnent, dans lesquels :
- la figure 1, déjà mentionnée, montre la constitution générale d'un tube de guidage suivant l'art antérieur et les moyens de raccordement de ce tube aux embouts d'un assemblage ;
- la figure 2, similaire à la figure 1, montre un tube de guidage suivant l'invention;
- les figures 3 et 4 sont des schémas destinés à montrer deux étapes successives de fabrication d'un tube suivant l'invention.

Le tube de guidage 30 montré schématiquement sur la figure 2 présente un diamètre externe D constant sur la quasi-totalité de sa longueur, exception faite d'une zone renflée terminale haute 34 de fixation à un embout supérieur non représenté. Le fait que le diamètre extérieur soit constant autorise la fixation de grilles à quelque emplacement que ce soit, par soudage ou par tout autre procédé mécanique, tel que sertissage ou dudgeonnage. Le tube présente une partie courante 32 d'épaisseur e₁ qui sera généralement du même ordre que l'épaisseur d'un tube de guidage classique de même diamètre nominal et de même longueur. Mais la partie inférieure du tube de guidage 30, occupant généralement de 10 à 30 % de la longueur totale du tube et habituellement 20 % environ, a une épaisseur accrue e₂, de façon à délimiter un canal de diamètre plus faible que dans la partie haute. La variation d'épaisseur entre e₁ et e₂ est progressive et s'effectue par exemple sous forme d'un cône d'angle au sommet d'environ 10°. La surépaisseur e₂-e₁ sera choisie en fonction de la perte de charge à imposer à l'écoulement ascendant du réfrigérant chassé du tube de guidage par la descente d'un crayon de contrôle. En amont de la partie inférieure rétreinte, dans une partie centrale du tube, des trous 37 peuvent être prévus pour laisser échapper du réfrigérant en cas de chute rapide du crayon de contrôle. Des trous 36 peuvent être percés dans la paroi du tube 30, à la partie inférieure de ce dernier, pour limiter la surpression et rendre plus progressif le freinage du crayon lorsqu'il arrive en fin de course.

Les extrémités supérieure et inférieure du tube guide 30 pourraient être différentes de celles représentées à titre d'exemple sur la figure 2, pour les adapter à des modes de fixation autres que ceux de la figure 1.

Divers procédés de fabrication sont utilisables pour réaliser un tube de guidage du genre montré en figure 2.

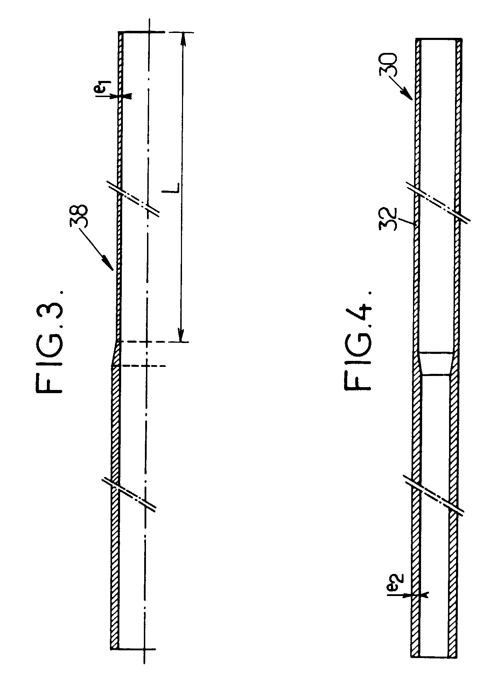

On peut notamment partir d'une ébauche constituée par un tronçon de tube de diamètre constant et d'épaisseur sensiblement égale à e₂, habituellement en alliage à base de zirconium à faible section de capture des neutrons. L'ébauche est soumise, sur une fraction de sa longueur destinée à donner naissance à la partie 32, à une réduction d'épaisseur jusqu'à une valeur proche de e₁, par un des procédés classiques de réduction de diamètre externe. On peut notamment utiliser un pétrissage ou martelage rotatif qui transforme l'ébauche en un produit intermédiaire 38, de diamètre interne sensiblement constant, du genre montré en figure 3.

Le produit intermédiaire 38 est alors soumis à un nouveau traitement destiné à réaliser un tube présentant un diamètre externe constant sur la quasi totalité de sa longueur. Le traitement métallurgique, qui permet d'arriver à un tube de guidage 30 du genre montré en figure 4, peut être constitué par un martelage rotatif permettant de repousser la partie épaisse vers l'intérieur du tube de guidage.

L'une et/ou l'autre des parties terminales du tube de guidage peuvent encore être mises en forme si nécessaire, en fonction du mode de fixation aux embouts. Le tube est soumis à des opérations d'usinage et de traitement destinées à lui donner un état de surface satisfaisant. Enfin, le tube obtenu par des opérations de martelage étant fortement écroui, il sera généralement soumis à un traitement thermique de revenu.

Le tube de guidage peut être constitué en divers alliages à base de zirconium, à faible absorption neutronique. Les traitements thermo-métallurgiques appliqués au tube au cours de sa fabrication dépendront, dans une certaine mesure, de l'alliage choisi.

Les tubes de guidage peuvent notamment être constitués en l'un des matériaux dénommés "Zircaloy-4", ayant la composition suivante, en poids :
- étain : 1,20-1,70 %,
- fer : 0,18-0,24 %,
- chrome : 0,07-0,13 %,
- oxygène : 0,09-0,16 %,
la somme des teneurs en fer et chrome étant comprise entre 0,18 et 0,37 %, le reste étant du zirconium, exception faite des impuretés inévitables.

Des ébauches tubulaires en Zircaloy-4, obtenues à partir de lingots, sont disponibles dans le commerce, sous forme détendue, en phase α. Sur ces ébauches, la réduction d'épaisseur est effectuée en au moins deux phases successives, à froid, avec recristallisation intermédiaire par chauffage à une température comprise entre 500°C et 750°C pendant une dizaine d'heures. Après traitement métallurgique de repoussage de la partie épaisse vers l'intérieur, le tube est soumis à un traitement final d'ensemble, constitué par un détensionnement à une température comprise entre 450°C et 750°C, qui ira souvent jusqu'à une recristallisation complète, obtenue par maintien de une à six heures à une température comprise entre 600°C et 750°C.

Il est également possible d'utiliser des tubes en alliage dit "Zircaloy-2", comportant du nickel et dont la composition est, en plus du zirconium :
- étain : 1,20 - 1,70 %
- fer : 0,07 - 0,20 %
- chrome : 0,05 - 0,15 %
- nickel : 0,03 - 0,08 %
la somme des teneurs en fer, chrome et nickel étant comprise entre 0,18 et 0,38 %.

Un autre alliage utilisable de zirconium ne comporte que 0,6 à 3 % de niobium et 90 à 3000 ppm d'oxygène, le reste étant constitué par les impuretés inévitables. Dans ce cas, les traitements de recristallisation intermédiaire seront généralement effectués entre 500°C et 620°C, pendant une à six heures. Le traitement final peut être le même que dans le cas du Zircaloy-4, mais avantageusement entre 500°C et 595°C.

On peut encore utiliser des alliages quaternaires à base de zirconium, comportant 0,3 à 1,7 % d'étain, et 0,01 à 0,8 % de fer, en poids, ainsi qu'au moins un des éléments suivants :
- niobium : 0,30 - 1,50 %
- vanadium : 0,10 - 0,50 %
- chrome : 0,03 - 0,50 %
- oxygène : 0,01 - 0,50 %

Dans ce cas, les recuits intermédiaires peuvent être effectués pendant une à six heures entre 450°C et 650°C. Le traitement final peut être constitué par un détensionnement de une à six heures, entre 450°C et 650°C.

## Revendications

1. Tube de guidage de crayon de commande pour assemblage combustible de réacteur nucléaire, en alliage à base de zirconium, dont la paroi est percée de trous (36,37) d'échappement du réfrigérant, présente une surface externe cylindrique, sauf éventuellement dans une zone terminale (34) de fixation à un embout et présente une épaisseur accrue dans une partie inférieure du tube de façon que le tube délimite avec un crayon cylindrique un passage qui est étranglé à la partie inférieure du tube,
caractérisé en ce que le tube est d'une seule pièce, d'épaisseur accrue et constante sur une longueur comprise entre 10 et 30 % de la longueur totale du tube et percée de certains des dits trous.

2. Tube selon la revendication 1, caractérisé en ce que la partie inférieure d'épaisseur accrue occupe environ 20 % de la longueur du tube.

3. Tube selon la revendication 1 ou 2, caractérisé par un raccordement entre la surface interne de la partie courante du tube et la surface interne de la partie inférieure épaissie ayant une forme de cône dont l'angle au sommet est d'environ 10°.

4. Procédé de fabrication de tube de guidage de crayon de commande pour assemblage combustible de réacteur nucléaire, caractérisé en ce que l'on constitue une ébauche tubulaire d'épaisseur sensiblement constante, on réduit l'épaisseur de l'ébauche sur une fraction de sa longueur comprise entre 70 et 90 % en conservant un diamètre intérieur constant, et l'on repousse vers l'intérieur la partie de l'ébauche qui a conservé son épaisseur d'origine pour constituer un tube de diamètre extérieur constant.

5. Procédé selon la revendication 4, caractérisé en ce que la réduction d'épaisseur et le repoussage sont effectués par martelage rotatif.

6. Procédé selon la revendication 4 ou 5, caractérisé par un traitement thermique final de détensionnement, à une température comprise entre 450°C et 650°C pendant plusieurs heures.

## Patentansprüche

1. Führungsrohr für einen Steuerstab für eine Kernreaktorbrennelementkassette, aus einer Legierung auf Zirkoniumgrundlage, in dessen Rand Kühlmittelaustrittslöcher (36, 37) gebrochen sind und das, ausgenommen ggf. in einem Endabschnitt (34) zur Befestigung an einem Kopfstück, eine zylindrische Außenfläche aufweist und in einem unteren Bereich des Rohres eine erhöhte Dicke aufweist, so daß das Rohr mit einem zylindrischen Stab einen Durchgang begrenzt, der im unteren Bereich des Rohres verengt ist,
dadurch gekennzeichnet, daß
das Rohr einstückig ist und auf einer Länge von zwischen 10 und 30 % der Gesamtlänge des Rohrs eine konstante, erhöhte Dicke hat und von einigen der Löcher durchbrochen ist.

2. Rohr nach Anspruch 1, dadurch gekennzeichnet, daß der untere Bereich mit erhöhter Dicke ca. 20 % der Länge des Rohrs ausmacht.

3. Rohr nach Anspruch 1 oder 2, dadurch gekennzeichnet, daß eine Verbindung zwischen der Innenoberfläche des gewöhnlichen Bereichs des Rohrs und der Innenoberfläche des unteren, verdickten Bereich des Rohrs die Form eines Kegels mit einem Scheitelwinkel von ca. 10° hat.

4. Verfahren zur Herstellung eines Führungsrohrs für einen Steuerstab für eine Kernreaktorbrennelementkassette, bei dem ein rohrförmiger Rohling von im wesentlichen konstanter Dicke gebildet wird, die Dicke des Rohlings auf einem Teil von zwischen 70 und 90 % seiner Länge unter Beibehaltung eines konstanten Innendurchmessers verringert wird und der Bereich des Rohlings, der seine ursprüngliche Dicke behalten hat, nach innen gedrückt wird, um ein Rohr mit konstantem Außendurchmesser zu bilden.

5. Verfahren nach Anspruch 4, bei dem die Dickenverringerung und das Eindrücken durch Drehhämmern bewirkt werden.

6. Verfahren nach Anspruch 4 oder 5 mit einer abschließenden Entspannungs-Wärmebehandlung über mehrere Stunden bei einer Temperatur zwischen 450 °C und 650 °C.

## Claims

1. Guide tube for a control rod for a nuclear reactor fuel assembly, made of a zirconium-base alloy, whose wall is formed with coolant outlet holes (36, 37) has an outer surface which is cylindrical except possibly in an end portion (34) for connection to a nozzle and has an increased thickness in a lower section of the tube whereby the tube defines a passage which is throttled in the lower section of the tube with a cylindrical rod,
characterized in that the tube is in one part and has a thickness which is increased and constant over a length which is comprised between 10% and 30% of the overall length of the tube, and the length is formed with some of said holes.

2. Tube according to claim 1, characterized in that the lower section of increased thickness occupies about 20% of the tube.

3. Tube according to claim 1 or 2, characterized by a connecting zone between the inner surface of the current portion of the tube and the inner surface of the lower thickened section, having a conical shape with an apex angle of about 10°.

4. Method of manufacturing a guide tube for a control rod for a nuclear reactor fuel assembly, characterized in that a tubular blank of substantially constant thickness is formed, the thickness of the blank is reduced over a fraction of its length lying in the range 70 to 90% while maintaining a constant inner diameter, and the section of the blank which has kept its original thickness is forced inwardly to constitute a tube of constant outer diameter.

5. Method according to claim 4, characterized in that the thickness is reduced and the wall is forced inwardly by rotary swanging.

6. Method according to claim 4 or 5, characterized by a final annealing heat treatment at a temperature in the range 450° C and 650° C for several hours.
